# EUROPÄISCHE PATENTSCHRIFT

(11) **EP 0 396 865 B1**
(45) Veröffentlichungstag und Bekanntmachung des Hinweises auf die Patenterteilung: **11.09.1996**
(21) Anmeldenummer: 90104210.1
(22) Anmeldetag: 05.03.1990
(51) Int. Cl.: G01S 17/88

(54) **Optisches Radar**
Optical radar
Radar optique

(30) Priorität: 12.05.1989 DE 3915627
(43) Veröffentlichungstag der Anmeldung: 14.11.1990
(73) Patentinhaber: DORNIER GmbH, D-88039 Friedrichshafen (DE)
(72) Erfinder: Metzdorff, Walter, Dr., D-7990 Friedrichshafen 24 (DE); Eibert, Max, Dr.Dipl.-Phys., D-7990 Friedrichshafen 24 (DE); Lux, Peter, Dr.Dipl.-Phys., D-7994 Langenargen (DE)

(56) Entgegenhaltungen:
- EP-A- 0 296 405
- WO-A-89/12837
- DE-A- 3 330 939
- US-A- 4 410 804
- RCA TECHNICAL NOTES, Nr. 752, April 1968, Nr. 21, Seiten 1-3, Princeton, NJ,US; W.J.HANNAN:"Laser mobility aid for the blind"

## Beschreibung

Die Erfindung betrifft ein optisches Radar, insbesondere ein Laserradar zur Erstellung von Entfernungsbildern zur Anwendung in Fluggeräten.

Entfernungsbilder sind solche, deren Bildpunkte nicht Angaben über die reflektierte Energie, sondern über die Entfernung des jeweiligen Punktes machen. Bei einem Schwarz/Weiß- oder Graustufenbild können so zum Beispiel nahe Objektpunkte dunkel sein, während entfernte Objektpunkte heller dargestellt werden . Entfernungsbilder können zur Navigation oder Navigationsaufdatung von Fluggeräten verwendet werden. Dabei wird ein vom Fluggerät überflogenes Gebiet zeilenweise abgetastet.

Dazu sind an sich schon Systeme bekannt geworden, die mechanisch bewegte Bauteile aufweisen, wie Klappspiegel oder rotierende Polygonspiegel. Diese Bauteile lenken einen Laserstrahl zeilenweise über den Boden und leiten die zurückkommende Energie einem Detektor zu. Der Nachteil der mechanisch beweglichen Sensoren liegt in der Systemlebensdauer und der begrenzten Lagerbarkeit sowie in der schlechteren Eignung für sehr hohe Fluggeschwindigkeiten.

Aufgabe der vorliegenden Erfindung ist es, ein optisches Radar vorzuschlagen , das eine hohe Lebensdauer und eine gute Lagerbarkeit aufweist.

Diese Aufgabe wird erfindungsgemäß gelöst von einem optischen Radar mit den Merkmalen des Anspruchs 1. Ausführungen der Erfindung sind Gegenstände von Unteransprüchen.

Erfindungsgemäß wird auf mechanische Strahlschwenkung verzichtet. Diese wird rein elektronisch durchgeführt. Statt der mechanischen Ablenkeinheiten sind zwei Diodenreihen parallel zueinander aufgestellt, von denen die eine als Sender, die andere als Empfänger dient. Beide Reihen sind mit einer oder mehreren Optiken so zueinander justiert, daß das von einer bestimmten Senderdiode ausgesandte Licht einen bestimmten Rasterpunkt am Objekt trifft und von dort auf eine bestimmte Empfängerdiode abgebildet wird.

Die Sender- und Empfängerzeilen sind bevorzugt parallel zueinander angeordnet. Sie können auch leicht gegeneinander geneigt angeordnet sein, so daß senkrecht ausgestrahltes Licht auch senkrecht auf dem Empfänger auftrifft. Die Strahlschwenkung und die Auswertung erfolgen elektronisch, wobei im wesentlichen aus dem Zeitintervall zwischen abgesandten und empfangenen Impuls die notwendigen Daten berechnet werden.

Die Erfindung wird anhand zweier Figuren näher erläutert.

Es zeigen:
- Figur 1: eine Ausführung eines erfindungsgemäßen optischen Radars,
- Figur 2: eine Elektronik zum Betrieb eines solchen Radars.

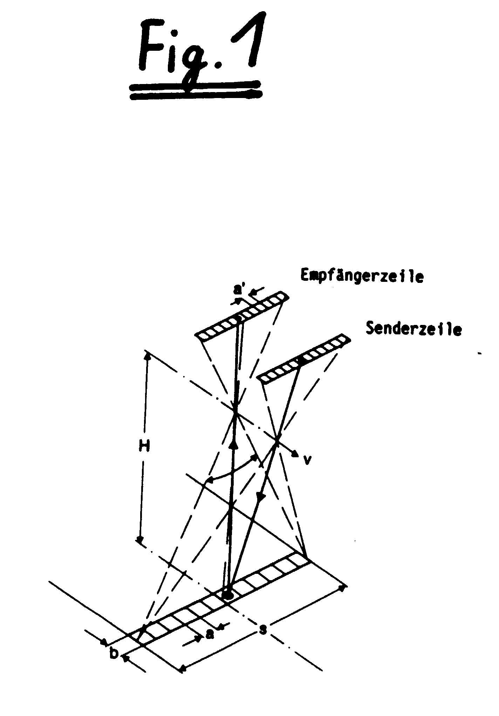

Figur 1 zeigt eine Ausführung eines erfindungsgemäßen Laserradars in seiner Anwendung an einem Flugkörper, der sich mit der Geschwindigkeit v in der Höhe H über dem Boden bewegt und das Gelände zeilenweise abtastet. Der Sensor arbeitet ohne mechanisch bewegte Teile. Das Radar wird im wesentlichen von zwei Zeilen von Dioden gebildet (Senderzeile und Empfängerzeile), die parallel zueinander angeordnet sind, an der Unterseite des Fluggeräts befestitgt sind nach unten oder schräg nach vorne blicken. Über eine (hier nur angedeutete) Optik bilden sie den entsprechenden Streifen am Gelände der Länge S ab. Jedem Rasterpunkt der Senderzeile entspricht ein Punkt am Boden der Abmessungen a x b und ein Rasterpunkt in der Empfängerzeile mit der Abmessung a′.

Die Winkelablenkung erfolgt bei diesem Gerät durch nacheinander erfolgendes Ansteuern der einzelnen Elemente der Senderzeile mit zeitlich korreliertem Ansteuern des entsprechenden Punktes der Empfängerzeile.

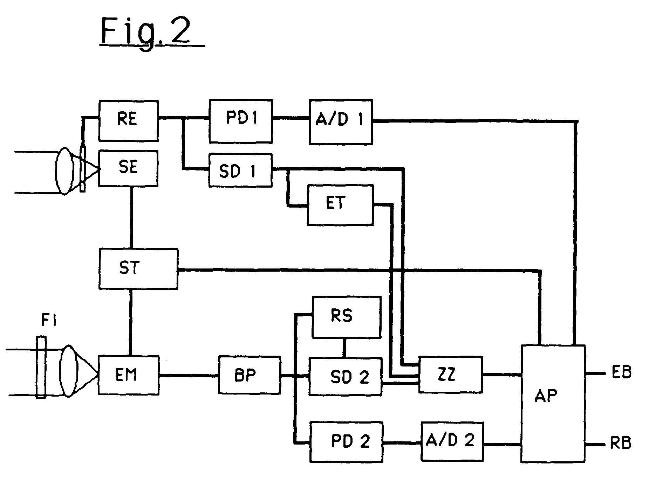

Figur 2 zeigt ein Blockschaltbild zum Betrieb eines erfindungsgemäpßen Sensors. Dieser Sensor erzeugt zum Beispiel hier mit der Lichtimpulslaufzeitmethode Entfernungsbilder und Reflexionsbilder aus den rückgestreuten und reflektierten Anteilen des gesendeten Lichtimpulses von Szenen beziehungsweise Objekten.

Der Abtastvorgang des Sensors zur Entfernungs- und Reflexionsbildgewinnung (Ausgänge EB und RB) erfolgt sequentiell mit der elektronisch geschalteten Lichtimpulssendereinheit SE und der Lichtimpulsempfängereinheit EM, gesteuert vom System-Timer (ST). Das Ausführungsbeispiel beinhaltet z.B. je 64 Sender- und Empfängerelemente, die über ein koaxiales oder biaxiales Optiksystem auf die zu vermessende Szene abgebildet werden.

Ein Teil des von der Sendeeinheit SE ausgesandten Lichts wird ausgekoppelt und dem Referenzempfänger RE zugeführt, der ein elektrisches Signal für die Startimpulsgewinnung im Signaldetektor SD1, sowie die Messung der Sendeleistung mittels erstem Spitzenwert-Detektor PD1 und erstem Analog/Digital-Wandler A/D1 bereitstellt. Der Startimpuls initiiert den Beginn der Zeitintervallmessung im Zeitintervallzähler ZZ und startet ein Zeittor (Entfernungstor ET), welches zur Unterdrückung von Nahbereichsechos, z.B. durch Nebel, dient.

Die 64 Empfängerelemente im Empfänger EM sind über einen elektronischen Multiplexer (nicht gezeigt) mit einer allen Kanälen gemeinsamen Signalverarbeitung verbunden. Alternativ ist ein einzelner Empfänger mit einem optischen Multiplexer (ausgeführt in integrierter Optik) eine weitere Lösungsvariante.

Zur Minimierung des Rauschens durchläuft der vom Zielobjekt rückgestreute Lichtimpuls ein optisches Filter FI, sowie ein elektrisches Bandpaßfilter BP. Da die Empfangsechos aufgrund unterschiedlicher Zielentfernungen und Objektreflextivitäten stark variieren, wird zur Stopimpulserzeugung das Constant-Fraction-Trigger-Prinzip im zweiten Signaldetektor SD2 verwendet. Eine Rauschpegelsteuerung RS, sowie das Entfernungstor ET sorgen für eine vernachlässigbar geringe Fehldetektionsrate. Die absolute Laufzeitmessung erfolgt mittels digitalem Zeitintervallzähler ZZ.

Die zur Empfangsleistung proportionale Signalamplitude der Empfängerelemente wird vom zweiten Spitzenwert-Detektor PD2 erfasst und über den zweiten Analog/Digital-Wandler A/D2 zum Auswerteprozessor AP geführt. der Prozessor verarbeitet die Leistungs- und Entfernungsdaten über geeignete Normierungsoperationen zu Reflektivitätsdaten und gibt diese parallel zum Entfernungsbild EB als Reflektivitätsbild RB aus.

Durch Anpassung der entsprechenden einzelnen Empfänger- und Sendergesichtsfelder, der Verwendung optischer und elektrischer Filter sowie einer Rauschpegelregelung mit Detektionsschwellenanpassung, wird eine weitergehende Unabhängigkeit von der Umgebungsbeleuchtung bzw. von den Tages- und Jahreszeiteinflüssen erreicht. Damit können stabile Entfernungswerte mit minimalen Ausfallraten erzeugt werden.

Mit dem einstellbaren Entfernungstor ET wird eine zeitliche Begrenzung der Meßintervalle bzw. der Entfernungsbereiche erreicht. Damit können sowohl die Falschalarmrate als auch die Nahbereichseinflüsse reduziert werden.

## Patentansprüche

1. Optisches Radar zur Aufnahme von Entfernungs- oder Reflexionsbildern, mit einer Diodenanordnung als Lichtquelle, einer Diodenanordnung als Lichtempfänger, einer oder mehrerer abbildenden Optiken und einer elektronischen Verarbeitung, **dadurch gekennzeichnet**, daß das Radar mit einem ersten linearen Diodenarray versehen ist, dessen Einzeldioden individuell zur Übertragung getriggerter Lichtpulse über einen ersten Stromkreis steuerbar sind und dieses Sender-Diodenarray - vom Objekt aus betrachtet - neben und nicht hinter einem zweiten als Empfänger ausgebildeten Diodenarray positioniert ist, wobei beide Arrays zeilenförmig ausgebildet sind und die Positionierung so vorgenommen ist, daß ein Lichtpuls aus einer bestimmten Senderdiode nach Reflexion in einem bestimmten Rasterfeld des Objekts auf eine bestimmte Empfängerdiode abgebildet wird, daß ein zweiter Stromkreis mit den Dioden des Empfängerarrays und dem ersten Stromkreis verbunden ist, um die Durchgangszeit des Lichtpulses - also seine Laufzeit - zu ermitteln vom Beginn des Triggerns einer Sendearray-Diode bis zum Empfang des Lichtpulses in der entsprechend zugeordneten Empfängerarray-Diode, und daß ein System-Timer vorhanden ist, der eine sequentielle Triggerung einer Sendearray-Diode und zeitlich korrelierten Empfang des Lichtpulses auf der zugeordneten Empfängerarray-Diode über sämtliche Paare von Senderarray-Diode/ zugeordnete Empfängerarray-Diode steuert.

2. Optisches Radar nach Anspruch 1, dadurch gekennzeichnet, daß die Diodenzeilen des Senders und des Empfängers parallel zueinander angeordnet sind.

3. Optisches Radar nach Anspruch 1 oder Anspruch 1, dadurch gekennzeichnet, daß die Zeilen leicht gegeneinander verkippt angeordnet sind.

4. Optisches Radar nach einem der vorhergehenden Ansprüche, dadurch gekennzeichnet, daß eine Elektronik vorgesehen ist, die aus dem Zeitintervall zwischen abgesandtem und empfangenem Impuls Bilddaten berechnet.

## Claims

1. Optical radar for taking distance or reflection images with a diode arrangement as light source, a diode arrangement as light receiver, one or a plurality of imaging optical systems and an electronic processing unit, **characterized in that** the radar is provided with a first linear diode array the single diodes of which can be actuated individually by means of a first electric circuit in order to transmit triggered light pulses and this transmitter diode array - viewed from the object - is positioned beside and not behind a second diode array formed as receiver, both arrays being of linear design and the positioning being carried out in a manner such that a light pulse from a particular transmitter diode is imaged on a particular receiver diode after reflection in a particular grid field of the object, in that a second electric circuit is connected to the diodes of the receiver array and to the first electric circuit in order to determine the transit time of the light pulse - thus its propagation time - from the start of the triggering of a transmitter-array diode to the receipt of the light pulse in the corresponding associated receiver-array diode, and in that a system timer is available and actuates a sequential triggering of a transmitter-array diode and time-correlated receipt of the light pulse on the associated receiver-array diode over all of the pairs of transmitter-array diodes/associated receiver-array diodes.

2. Optical radar according to Claim 1, characterized in that the rows of diodes of the transmitter and of the receiver are arranged parallel to one another.

3. Optical radar according to Claim 1 or Claim 2, characterized in that the rows are tilted slightly towards one another.

4. Optical radar according to any one of the preceding claims, characterized in that an electronic unit is provided and computes image data from the time interval between transmitted and received pulse.

## Revendications

1. Radar optique pour l'enregistrement d'images de télémétrie ou de réflexion, comprenant un système de diodes comme source lumineuse, un système de diodes comme récepteur de lumière, une ou plusieurs optiques de reproduction et un traitement électronique, **caractérisé en** ce que le radar est muni d'un premier réseau linéaire de diodes dont les diodes individuelles peuvent être commandées par l'intermédiaire d'un premier circuit pour la transmission d'impulsions de lumière déclenchées et que ce réseau de diodes d'émission est positionné - vu de l'objet - à côté et non pas derrière un second réseau de diodes conformé en récepteur, les deux réseaux étant disposés en lignes et le positionnement étant effectué de telle façon qu'une impulsion de lumière provenant d'une diode émettrice déterminée est reproduite, après réflexion dans un champ de balayage déterminé de l'objet, sur une diode réceptrice déterminée, qu'un second circuit est relié aux diodes du réseau récepteur et au premier circuit pour déterminer le temps de passage de l'impulsion de lumière - c'est-à-dire son temps de propagation - entre le début du déclenchement d'une diode du réseau d'émission jusqu'à la réception de l'impulsion de lumière par la diode associée du réseau récepteur, et qu'il est prévu une horloge de système qui commande un déclenchement séquentiel d'une diode du réseau d'émission et une réception corrélée dans le temps de l'impulsion de lumière sur la diode associée du réseau récepteur sur toutes les paires de diodes du réseau d'émission/diode associée du réseau récepteur.

2. Radar optique selon la revendication 1, caractérisé en ce que les lignes de diodes de l'émetteur et du récepteur sont disposées parallèlement les unes aux autres.

3. Radar optique selon la revendication 1 ou la revendication 2, caractérisé en ce que les lignes sont légèrement inclinées les unes par rapport aux autres.

4. Radar optique selon l'une des revendications précédentes, caractérisé en ce qu'il comprend un système électronique qui calcule des données d'image à partir de l'intervalle de temps entre l'impulsion émise et l'impulsion reçue.
